# EUROPEAN PATENT APPLICATION

(11) **EP 2 111 027 A1**
(43) Date of publication of application: **21.10.2009**
(21) Application number: 08290373.3
(22) Date of filing: 15.04.2008
(51) Int. Cl.: H04M 3/42, H04M 3/22

(54) **Method for recording a dropped telephone call**

(71) Applicant: Alcatel Lucent, 75008 Paris (FR)
(72) Inventor: Joahnn Klein, 74321 Bietigheim-Bissingen (DE)
(74) Representative: Kohler Schmid Möbus

(57) **Abstract**

The invention relates to a mobile station that experiences a dropped call, the communication may continue by recording the user's speech for later retrieval by the other party. In particular to a method for performing a telephone call between a first user (1) and a second user (2), comprising: connecting a first user equipment (1a) of the first user (1) to a second user equipment (2a) of the second user (2) for establishing a telephone call between the first and second user (1,2). The method further comprises: in case that the connection (6a,6b) between the first and second user equipment (1a,2a) is interrupted during the telephone call, recording further speech data (D) provided by at least the first user (1) on a data server (10), and making the recorded speech data (D) of the data server (10) available to the second user (2). The invention also relates to a computer program product for implementing the method and to a communications network (3) for performing the method.

## Description

### Background of the Invention

The invention relates to a method for performing a telephone call between a first user and a second user, the method comprising: connecting a first user equipment of the first user to a second user equipment of the second user for establishing a telephone call between the first and second user. The invention further relates to a computer program product for implementing the method, and to a communications network comprising a radio access network for connecting a first user equipment of a first user to a second user equipment of a second user for establishing a telephone call between the first and second users.

For establishing a telephone call between a first user (also referred to as calling user) and a second user (also referred to as called user), a connection between their respective end user equipments has to be provided, e.g. via a radio access network. When a call interrupt occurs, i.e. when the connection between the end user equipments is broken, which may be the case when the second user changes his position and enters a dead spot of the radio access network, there is no possibility for the first and second users to exchange any further information. Therefore, in case that further information has to be exchanged between the first and the second user, typically one of the two has to establish a new call after the second user has left the dead spot and is available again. However, establishing a new telephone call once inconvenient for the users, such that there is a need for providing further information from the first to the second user (and possibly in the opposite direction) after the connection has been disrupted without having to establish a new telephone call.

### Object of the Invention

It is the object of the invention to provide: a method, a computer program product for implementing the method, and a communications network, all of which allow providing information from a first to a second user after a call interrupt.

### Summary of the Invention

This object is achieved by a method as described above, further comprising: in case that the connection between the first and second user equipment is interrupted during the telephone call, recording further speech data provided by at least the first user on a data server, and making the recorded speech data of the data server available to the second user. In such a way, establishing the connection between the first and the second user equipment once again in order to establish a further telephone call providing further information to the second user may be avoided.

The approach described above allows to guarantee that from the moment of a call interrupt, e.g. due to a dead spot, the first (calling) user gets the possibility to complete his call by saving his speech data on an appropriate element (data server), typically being a network element of a radio access network which is also used to establish the telephone call. However, in case that sufficient memory is available on the end user equipment of the first user (being e.g. a Personal Digital Assistant (PDA)), it is also possible to use the first user equipment as a data server.

In a preferred variant, the user equipment of at least the second user is a mobile end user equipment of a radio access network, the call interrupt being caused when the mobile end user equipment of the second user enters a dead spot of the radio access network. When the end user equipment of the second user is in the dead spot, the latter has no connection to the radio access network and consequently, a data server in the radio access network cannot be used to record speech data of the second user. However, in case that sufficient memory is available on the mobile end user equipment of the second user, it is also possible to record further speech data of the second user on his end user equipment, and the speech data may then be provided to the first user after the second user has left the dead spot.

In yet another preferred variant, the method further comprises: generating a message for informing the first user that further speech data may be recorded on the data server. In such a way, once the call interrupt is detected, the first user may complete his call by providing speech data which contains the information the first user wants to be provided to the second user by storing the speech data on the data server and may terminate the call afterwards.

In an advantageous variant, the method further comprises: generating a message for informing the second user that further speech data from the first user is available on the data server. As soon as the second user is available again, the second user can be informed that it is possible to listen to speech data from the first user. The second user may then decide if he wants to request the offered speech data immediately, or if he wants to defer the requesting of the user data to a later time.

In yet another preferred variant, the method further comprises: providing the recorded speech data to the second user equipment upon request by the second user. Thus, the second user may listen to the speech data which is transmitted to his user equipment from the data server, and from that point on, he has the complete information provided by the first user. Consequently, it is no longer necessary for the second user to call the first user again in order to get the rest of the information. It is understood that the recorded speech data may not be stored on the data server permanently in order not to waste network resources. Therefore, the recorded speech data may be erased e.g. upon request by the second user, or after a pre-defined time interval has elapsed.

In an advantageous variant, a mailbox of the second user is used as the data server for recording speech data of the first user. Thus, the data server may be part of a mailbox which is typically part of a communications network, in particular of a radio access network. In such a way, the speech data of the first user which is recorded after the call interrupt may be stored on the same network element together with further speech data.

A second aspect of the invention is implemented in a computer program product comprising code means for performing all the steps of the method described above. The computer program product is typically devised as suitable software installed on a network component. However, the computer program product may also be implemented in a hardware component, in particular a field programmable gate array (FPGA) or an application-specific integrated circuit (ASIC).

A third aspect of the invention is implemented in a communications network as described in the introduction, further comprising: a call interruption detection unit for detecting an interruption of the connection during the telephone call, a data server adapted to record further speech data provided by at least the first user in case that the interruption detection unit has detected an interruption of the connection, and a data provisioning unit adapted to make the recorded speech data of the data server available to the second user. With the communications network described above, it is not necessary to set up a further telephone call between the first and second user equipment in order to exchange further information.

In a preferred embodiment, the method further comprises: a message generating unit adapted to generate a message for informing the first user that further speech data may be recorded on the data server after the call interrupt, and adapted to generate a message for informing the second user that further speech data from the first user is available on the data server. The messages generated by the message generating unit may be provided to the first and second user equipments, respectively. The messages may contain data which may be visualized by the respective user equipment and/or audio data, in particular speech data.

In a further preferred embodiment, the data server is implemented as a mailbox of the second user, thus allowing the second user to retrieve the speech data as usual, i.e. by connecting his user equipment to his mailbox. Alternatively, the data server may be implemented in the user equipment of the respective first or second users or at another location within the communications network.

Further features and advantages are stated in the following description of exemplary embodiments, with reference to the figures of the drawing, which shows significant details, and are defined by the claims, The individual features can be implemented individually by themselves, or several of them can be implemented in any desired combination.

### Brief Description of the Drawings

Exemplary embodiments are shown in the diagrammatic drawing and are explained in the description below. The following are shown:

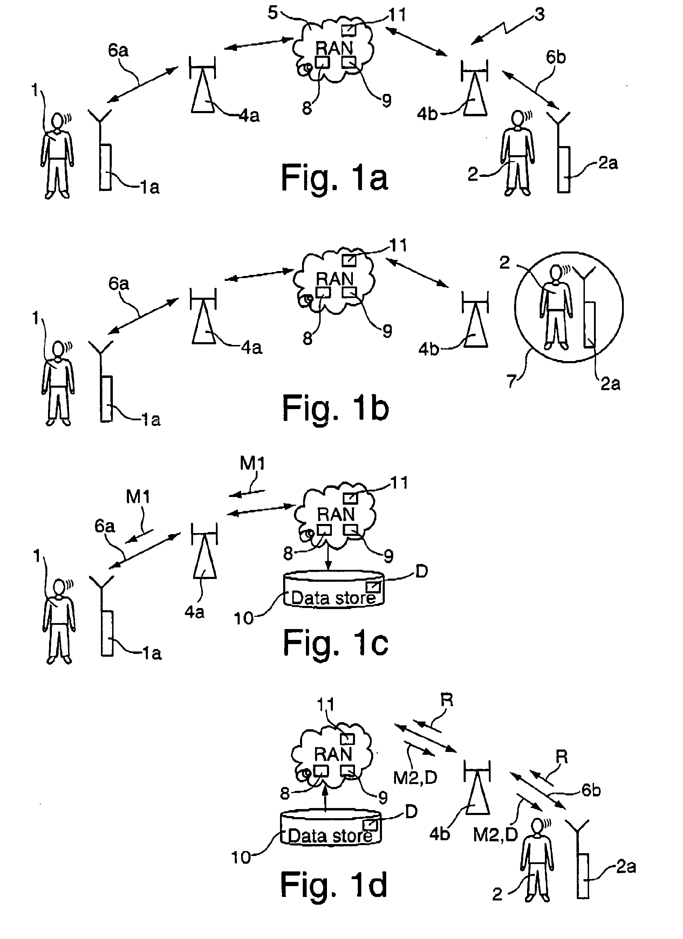

- **Figs. 1a-d**: show schematic diagrams of steps of a variant of the inventive method for performing a telephone call using an embodiment of a communications network according to the invention.

### Detailed Description of Preferred Embodiments

**Fig. 1a** shows a first (calling) user **1** which performs a telephone call with a second (called) user **2** of a communications network **3.** For establishing the telephone call, a first mobile end user equipment **1a** (mobile phone) of the first user 1 is connected to a first base station **4a** of a radio access network **5** via a first wireless connection **6a.** In the same way, a second mobile end user equipment **2a** (PDA) of the second user 2 is connected to a second base station **4b** of the radio access network **5** via a second wireless connection **6b.** When the call is established (set up), the first and second users 1, 2 may exchange speech data via the wireless connections 6a, 6b and via the radio access network 5, the latter serving to set up telephone calls for a plurality of further users (not shown).

When the second user 2 and the second mobile end user equipment 2b, respectively, move through the communications network 3 and reach a dead spot **7** as shown in **Fig. 1b****,** the second wireless connection 6b is broken and the mobile end user equipment 2a of the second user 2 is no longer connected to the radio access network 5. Consequently, the call is interrupted and the first and second users 1, 2 are no longer capable to exchange further information. In this situation, a call interruption detection unit **8** of the radio access network 5 detects an interruption of the connection between the first and second end user equipments 1a, 2a.

As is shown in **Fig. 1c****,** representing only part of the communications network 3 for the sake of simplicity, the call interruption detection unit 8 provides the information about the call interrupt to a message generating unit **9** which generates a first message **M1** for informing the first user 1 that he may use his end user equipment 1a to record further speech data **D** on a data server **10** of the radio access network and that the recorded speech data D may be provided to the second user 2 after he has left the dead spot 7. In the present example, the user 1 decides to use the offered service and continues the call such that his speech data D is recorded on the data server 10,

After the first user 1 has terminated the call and the second user 2 has left the dead spot 7 (see **Fig. 1d****),** the call interrupt detection unit 8 triggers the message generating unit 9 to generate a message **M2** for informing the second user 2 that the further speech data D from the first user 1 is available on the data server 10. The second user 2 may then decide if he wants to request the recorded speech data D from the data server 10 at once or at a later time. Once the second user 2 has decided that he wants to listen to the recorded speech data D, he triggers the mobile end user equipment 2a to send a request **R** to a data provisioning unit **11** of the radio network 5 which is makes the recorded speech data D of the data server 10 available to the second user 2 by transmitting it via the re-established second wireless connection 6b to the second mobile end user equipment 2a. In such a way, it is possible to provide information from the first user 1 to the second user 2 after the call interruption, without the need for the first or second user to establish a new telephone call.

The person skilled in the art will appreciate that the data server 10 of the radio access network 5 may be devised as a mailbox of the first or second user 1, 2, respectively. The mailbox may be present in the radio access network 5 anyhow, such that no additional component has to be implemented for storing the speech data D. Alternatively, in case that sufficient memory is available on the first and the on second mobile user equipment 1a, 2a, it is also possible to store the speech data directly on the equipment 1a, 2a of the respective users 1, 2. In this case, it is possible for the second user 2 to record speech data also when the second user 2 is located in the dead spot 7. For this purpose, in the second end user equipment 2a, a call interruption detection unit and a message generating unit for generating a message informing the second user 2 that further speech data may be recorded on his end user equipment 2a may be implemented. The recorded rest of the speech data of the call may then be provided to the first user 7 after the second user 2 has left the dead spot 7. The person skilled in the art will appreciate that in the latter case it is also possible that both users 1, 2 may store speech data on their respective data servers, thus allowing an exchange of information even after the call has been interrupted.

It will be understood that the first and second user equipment 1a, 2a is not necessarily devised as mobile user equipment, i.e. the user equipment of the first and/or second user 1, 2 may also be stationary and that both equipments may be connected via a wired connection. In this case, the call interrupt may e.g. be caused by a break in the wired connection. The person skilled in the art will also appreciate that the units described above have to be regarded as functional entities which may be devised as software or hardware components being implemented in together in one physical entity or in two or more different physical entities. The person skilled in the art will also appreciate that although herein above, the first user 1 has been referred to as the calling user and the second user 2 has been referred to as the called user, the inverse relation is also possible, i.e. the first user 1 may be the called user and the second user 2 may be the calling user.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the spirit and scope of the invention, as defined by the appended claims, and equivalents thereof.

## Claims

1. Method for performing a telephone call between a first user (1) and a second user (2), comprising:
connecting a first user equipment (1 a) of the first user (1) to a second user equipment (2a) of the second user (2) for establishing a telephone call between the first and second user (1, 2),
**characterized in that**
in case that the connection (6a, 6b) between the first and second user equipment (1a, 2a) is interrupted during the telephone call, recording further speech data (D) provided by at least the first user (1) on a data server (10), and
making the recorded speech data (D) of the data server (10) available to the second user (2).

2. Method according to claim 1, wherein the user equipment (2a) of at least the second user (2) is a mobile end user equipment of a radio access network (5), the call interrupt being caused when the mobile end user equipment (2a) enters a dead spot (7) of the radio access network (5).

3. Method according to claim 1, further comprising: generating a message (M1) for informing the first user (1) that further speech data (D) may be recorded on the data server (10).

4. Method according to claim 1, further comprising: generating a message (M2) for informing the second user (2) that further speech data (D) from the first user (1) is available on the data server (10).

5. Method according to claim 1, further comprising: providing the recorded speech data (D) to the second user equipment (2a) upon request by the second user (2).

6. Method according to claim 1, wherein a mailbox of the second user (2) is used as the data server (10) for recording the speech data (D) of the first user (1).

7. Computer program product comprising code means for performing all the steps of the method according to claim 1.

8. Communications network (3), comprising:
a radio access network (5) for connecting a first user equipment (1a) of a first user (1) to a second user equipment (2a) of a second user (2) for establishing a telephone call between the first and second users (1, 2),
**characterized by**
a call interruption detection unit (8) for detecting an interruption of the connection (6a, 6b) during the telephone call,
a data server (10) adapted to record further speech data (D) provided by at least the first user (1) in case that the interruption detection unit (8) has detected an interruption of the connection (6a, 6b), and
a data provisioning unit (11) adapted to make the recorded speech data (D) of the data server (10) available to the second user (2).

9. Communications network according to claim 8, further comprising: a message generating unit (9) adapted to generate a message (M1) for informing the first user (1) that further speech data (D) may be recorded on the data server (10) after the call interrupt, and adapted to generate a message (M2) for informing the second user (2) that the further speech data (D) from the first user (1) is available on the data server (10).

10. Communications network according to claim 8, wherein the data server (10) is implemented as a mailbox of the second user (2).

## Amended claims

### Amended claims in accordance with Rule 137(2) EPC.

**1.** Method for performing a telephone call between a first user (1) and a second user (2), comprising:
connecting a first user equipment (1a) of the first user (1) to a second user equipment (2a) of the second user (2) for establishing a telephone call between the first and second user (1, 2),
in case that the connection (6a, 6b) between the first and second user equipment (1a, 2a) is interrupted during the telephone call, recording further speech data (D) provided by at least the first user (1) on a data server (10), and
making the recorded speech data (D) of the data server (10) available to the second user (2), wherein the user equipment (2a) of at least the second user (2) is a mobile end user equipment for a radio access network (5), the call interrupt being caused when the mobile end user equipment (2a) enters a dead spot (7) of the radio access network (5), wherein a network element of the radio access network (5) is used as the data server (10) for recording the speech data (D) of the first user (1), and
wherein the mobile end user equipment (2a) of the second user (2) is used for recording the speech data (D) of the second user (2).

**2.** Method according to claim 1, further comprising: generating a message (M1) for informing the first user (1) that further speech data (D) may be recorded on the data server (10).

**3.** Method according to claim 1, further comprising: generating a message (M2) for informing the second user (2) that further speech data (D) from the first user (1) is available on the data server (10).

**4.** Method according to claim 1, further comprising: providing the recorded speech data (D) to the second user equipment (2a) upon request by the second user (2).

**5.** Method according to claim 1, wherein a mailbox of the second user (2) is used as the data server (10) for recording the speech data (D) of the first user (1).

**6.** Computer program product comprising code means for performing all the steps of the method according to claim 1.

**7.** Communications network (3), comprising:
a radio access network (5) for connecting a first user equipment (1a) of a first user (1) to a second user equipment (2a) of a second user (2) for establishing a telephone call between the first and second users (1, 2),
a call interruption detection unit (8) for detecting an interruption of the connection (6a, 6b) during the telephone call,
a data server (10) adapted to record further speech data (D) provided by at least the first user (1) in case that the interruption detection unit (8) has detected an interruption of the connection (6a, 6b), and
a data provisioning unit (11) adapted to make the recorded speech data (D) of the data server (10) available to the second user (2), wherein the data server for recording the speech data (D) of the first user (1) is implemented in a network element of the radio access network (5), wherein the communications network (3) further comprises a mobile end user equipment (2a) of the second user (2), the data server for recording the speech data (D) of the second user (2) being implemented on the mobile end user equipment (2a) of the second user (2).

**8.** Communications network according to claim 7, further comprising: a message generating unit (9) adapted to generate a message (M1) for informing the first user (1) that further speech data (D) may be recorded on the data server (10) after the call interrupt, and adapted to generate a message (M2) for informing the second user (2) that the further speech data (D) from the first user (1) is available on the data server (10).

**9.** Communications network according to claim 7, wherein the data server (10) is implemented as a mailbox of the second user (2).
